# EUROPÄISCHE PATENTANMELDUNG

(11) **EP 1 876 525 A1**
(43) Veröffentlichungstag der Anmeldung: **09.01.2008**
(21) Anmeldenummer: 06013755.1
(22) Anmeldetag: 03.07.2006
(51) Int. Cl.: G06F 9/44

(54) **Verfahren zur Modifizierung von Steuergerät-Software**

(71) Anmelder: SIEMENS AKTIENGESELLSCHAFT, 80333 München (DE)
(72) Erfinder: Brüll, Martin, 93092 Barbing (DE); Burger, Thomas, Dr., 93051 Regensburg (DE)

(57) **Zusammenfassung**

Die vorliegende Erfindung betrifft ein "Rapid Prototyping" zur Modifizierung von Steuergerät-Software, insbesondere im Rahmen einer Weiterentwicklung von Motorsteuergeräten für Brennkraftmaschinen von Kraftfahrzeugen.

Erfindungsgemäß wird ein Verfahren zur Modifizierung wenigstens einer Funktionalität (10) eines mikroprozessorgesteuerten Steuergeräts (ECU) vorgeschlagen, in welchem eine Vielzahl von Funktionalitäten durch eine SteuergerätSoftware (SW) implementiert sind.

Hierzu wird eine modifizierte Funktionalität (10') der Steuergerät-Software (SW) isoliert auf einem Rechnersystem modelliert und simuliert, um ein Funktionalitätsmodell (30) mit Datenein- und ausgängen und Triggereingängen festzulegen. Sodann wird dieses Modell (30) automatisiert analysiert, mit Schnittstelleneinheiten ergänzt und in eine Software für eine mikroprozessorgesteuerte Prototyping-Einheit (RPU) umgewandelt und auf diese übertragen. Damit kann dann eine versuchsweise Steuerung unter Berücksichtigung der modellierten Funktionalität (10') erfolgen.

## Beschreibung

Die vorliegende Erfindung betrifft ein Verfahren zur Modifizierung von Steuergerät-Software, wie es insbesondere bei der Neuentwicklung und Weiterentwicklung von Motorsteuergeräten für Brennkraftmaschinen von Kraftfahrzeugen verwendet werden kann. Der Begriff "Modifizierung" soll hierbei sowohl die Veränderung einer in der Software bereits enthaltenen Funktionalität als auch die Ergänzung der Software mit einer neuen Funktionalität umfassen.

Steuergeräte für komplexere technische Einrichtungen wie z. B. eine moderne Brennkraftmaschine sind üblicherweise als mikroprozessorgesteuerte elektronische Einrichtungen ausgebildet, in welchen eine Vielzahl von Funktionalitäten für die Steuerung der technischen Einrichtung durch eine im Steuergerät ablaufende Steuergerät-Software implementiert sind.

Funktionalitäten beziehen sich zumeist auf eine programmgesteuerte Berechnung von Ausgangsdaten basierend auf bestimmten Eingangsdaten, wobei die Eingangsdaten beispielsweise von dem Steuergerät zugeführten Sensorsignalen oder den Ausgangsdaten einer anderen Funktionalität gebildet sein können, und wobei hinsichtlich des Zeitpunkts der Gewinnung von Eingangsdaten sowie des Zeitpunkts der damit durchgeführten Berechnungen zumeist strenge Anforderungen zu erfüllen sind. Mit anderen Worten muss für jede Funktionalität die Dateneingabe, die Datenberechnung sowie gegebenenfalls die Datenausgabe "getriggert" werden.

Gemäß eines auf betrieblichen Kenntnissen der Anmelderin beruhenden internen Stands der Technik für die Entwicklung von Funktionalitäten für Motorsteuergeräte wurde eine "Rapid Prototyping"-Methode angewendet, um möglichst rasch eine versuchsweise Modifizierung wenigstens einer Funktionalität des Steuergeräts für einen Praxistest zu realisieren. Dazu wird eine in der Steuergerät-Software bereits vorhandene bzw. reguläre Funktionalität (z. B. die Berechnung der Kraftstoffeinspritzzeit oder des Solldrehmoments) durch eine Neuentwicklung modifiziert und/oder ergänzt. Dies geschieht in der Regel durch einen funktionellen Bypass: In der regulären Steuergerätssoftware sind bereits so genannte "Freischitte" in Form von Software-Schnittstellen enthalten bzw. eingebaut, die Aus- und Einsprungstellen in der Steuergerätefunktionalität darstellen. An den als Aussprungstellen vorgesehenen Freischnitten kann die betreffende reguläre Funktionalität verlassen und eine neuentwickelte oder modifizierte Funktionalität angetriggert werden. Die für die modifizierte Funktionalität benötigten Eingangsdaten werden mittels der Aussprungstelle z. B. an ein externes Zusatzgerät als "Rapid Prototyping Unit" übertragen, in welchem die modifizierte Funktionalität durch eine Zusatzgerät-Software implementiert ist. Am Ende der Berechnung der modifizierten Funktionalität werden die Ergebnisse (Ausgangsdaten) dann über den als Einsprungstelle an die reguläre Steuergerät-Software vorgesehenen Freischnitt übergeben und die Berechnung in der regulären Steuergerät-Software fortgesetzt.

Dieses Rapid Prototyping kann durch so genannte "Tool-Software" unterstützt werden, die eine Modellierung und Simulation der Funktionsneuentwicklung als im Zusatzgerät ausführbare Software ermöglicht. Die modifizierte Funktionalität kann dann in Echtzeit im Zusatzgerät ausgeführt und an die reguläre Steuergerät-Software mittels der erwähnten Freischnitte angekoppelt werden. Für diese Ankopplung müssen bei der Modellierung der modifizierten Funktionalität durch den Funktionsentwickler sehr zeitaufwendig spezielle Software-Schnittstellen in der Zusatzgerät-Software geschaffen werden, ohne die eine funktionierende Anbindung des Zusatzgeräts an das Steuergerät nicht möglich ist. In der Zusatzgerät-Software müssen insbesondere spezielle Einheiten für die Datenkommunikation (Dateneingabe und Datenausgabe) zwischen der modellierten Funktionalität und der regulären Steuergerät-funktionalität bzw. Steuergerät-Software sowie für den Austausch von Triggern geschaffen werden. Diesem "manuellen Einbau von Schnittstelleneinheiten" geht eine mehr oder weniger aufwendige und somit ebenfalls zeitraubende Analyse des Funktionalitätsmodells voraus.

Es ist eine Aufgabe der vorliegenden Erfindung, die Modifizierung, insbesondere versuchsweise Modifizierung wenigstens einer Funktionalität eines mikroprozessorgesteuerten Steuergeräts zu vereinfachen.

Diese Aufgabe wird gemäß der Erfindung durch ein Verfahren mit den Merkmalen des Anspruchs 1 gelöst. Die abhängigen Ansprüche betreffen vorteilhafte Weiterbildungen der Erfindung.

Das erfindungsgemäße Verfahren kann insbesondere die Neuentwicklung und Weiterentwicklung von Steuergeräten im Automobilbereich vereinfachen und umfasst folgende Schritte:
a) isoliertes Modellieren und Simulieren einer modifizierten Funktionalität der Steuergerät-Software auf einem Rechnersystem zur Festlegung eines Funktionalitätsmodells mit Datenein- und/oder ausgängen und/oder Triggereingängen,
b) wenigstens teilweise automatisiertes Analysieren des in Schritt a) festgelegten Funktionalitätsmodells hinsichtlich der Funktionstriggerung und/oder der Dateneingabe und/oder der Datenausgabe,
c) Ergänzen des Funktionalitätsmodells mit Schnittstelleneinheiten basierend auf dem Ergebnis der Analyse von Schritt b), wobei dieses Ergänzen bevorzugt wenigstens teilweise oder sogar vollständig automatisiert erfolgen kann,
d) Umwandeln des in Schritt c) erhaltenen ergänzten Funktionalitätsmodells auf dem Rechnersystem in eine Software für eine mikroprozessorgesteuerte Prototyping-Einheit, und Übertragen dieser Software auf die Prototyping-Einheit zur Steuerung der technischen Einrichtung unter Berücksichtigung der in Schritt a) modellierten Funktionalität.

Wenn mit dem Verfahren die Software eines Motorsteuergeräts für eine Brennkraftmaschine eines Kraftfahrzeugs zu Testzwecken modifiziert wird, so kann die zu modifizierende Funktionalität z. B. wenigstens eine der folgenden Funktionen umfassen: Berechnung von Steuergrößen betreffend eine Kraftstoffeinspritzung wie z. B. Einspritzzeit(en) und/oder Einspritzmenge(n), Berechnung eines Soll-Drehmoments, Berechnung von Zündzeitpunkten (bei fremdgezündeten Brennkraftmaschinen) etc.

Die bei der Erfindung verwendete "Prototyping-Einheit" kann beispielsweise als ein extern (vom Steuergerät) vorgesehenes Zusatzgerät vorgesehen sein. Alternativ oder zusätzlich ist es jedoch auch möglich, die Prototyping-Einheit im Bereich des Steuergeräts bzw. durch das Steuergerät selbst zu realisieren. Hiefür können insbesondere im Steuergerät ohnehin vorgesehene Bausteine (Mikroprozessor, Speicher, etc.) genutzt werden.

Ein wesentlicher Vorteil der Erfindung ergibt sich insbesondere dann, wenn der Einbau von Schnittstelleneinheiten in das zuvor festgelegte Funktionalitätsmodell wenigstens teilweise automatisiert erfolgt, so dass viel Zeit gespart wird. Eine weitere Zeitersparnis ergibt sich bei der Erfindung dadurch, dass die dem Schnittstelleneinbau vorausgehende Analyse des Funktionalitätsmodells nicht wie bisher manuell durch den Funktionsentwickler sondern wenigstens teilweise automatisiert durchgeführt wird. Eine solche Einsparung an Zeit führt in der Praxis zu einer Kostenreduktion bei der Funktionsentwicklung sowie zu einer Beschleunigung hinsichtlich der Verfügbarkeit einer neuen oder geänderten Funktionalität, was insbesondere für komplexe Steuergeräte wie Steuergeräte für moderne Brennkraftmaschinen von großem Interesse ist. In dem oben erwähnten Schritt b) kann das Funktionalitätsmodell detailliert analysiert und gegebenenfalls verbessert werden, bevor der automatisierte Schnittstelleneinbau erfolgt und die auf der Prototyping-Einheit (z. B. Zusatzgerät) lauffähige Software geschaffen wird. Durch die Automatisierung kann das zuvor festgelegte Funktionalitätsmodell optimal via "Rapid Prototyping" an das Steuergerät angebunden werden. Fehler bei der Anbindung, die bislang bei einem manuellen Ankoppeln auftreten konnten und sich mitunter erst sehr viel später im Entwicklungsprozess bemerkbar machten, können vorteilhaft beseitigt oder zumindest minimiert werden. Dies führt zur Einsparung von Verbesserungsschleifen und zu einer deutlichen Kostenreduktion in der Funktionsentwicklung. Beim Modellieren und Simulieren der modifizierten Funktionalität im Schritt a) kann bereits eine mehr oder weniger detaillierte Schnittstellenanalyse des Funktionalitätsmodells vom Entwickler vorgenommen werden, etwa um die später im Entwicklungsprozess erforderliche endgültige Einbindung des aus dem Funktionalitätsmodell erzeugten Softwarecodes in eine bestehende Steuergerät-Software einfach zu gestalten. Diese vom Entwickler im Schritt a) isoliert und somit komfortabel beispielsweise an einem PC durchzuführende Analyse und Optimierung des Modells ermöglicht damit auch eine deutliche Effizienzsteigerung bei diesem letzten Teil des Entwicklungsprozesses.

Wie eingangs bereits erwähnt, kann die weiterzuentwickelnde Steuergerät-Software für wenigstens eine darin enthaltene Funktionalität bereits Freischnitte umfassen, die zur Modifizierung und/oder Ergänzung einer regulären Steuergerät-Funktionalität dienen. Diese Freischnitte sind bevorzugt als Aus- und Einsprungstellen der Steuergerät-Software ausgebildet, an welchen Eingangs- bzw. Ausgangsdaten für eine modifizierte Funktionalität zusammen mit zugeordneten Triggerinformationen übertragbar sind. Alternativ oder zusätzlich können solche Freischnitte bei dem in Schritt c) vorgesehenen Ergänzen des Funktionalitätsmodells in der Steuergerät-Software implementiert werden. Letztere Maßnahme bietet sich insbesondere dann an, wenn die Prototyping-Einheit nicht als externes Zusatzgerät sondern durch das Steuergerät selbst implementiert ist (z. B. als zur versuchsweisen Modifizierung der Steuergerät-Software reservierter Teil des Steuergeräts).

In einer bevorzugten Ausführungsform wird der Schritt a) mittels einer auf dem Rechnersystem (z. B. herkömmlicher PC) laufenden Modellierungs/Simulations-Software durchgeführt, welche es einem Benutzer erlaubt, das Funktionalitätsmodell modulartig als Verknüpfung vorgegebener Modellelemente zu erstellen und zu simulieren. Bevorzugt sind wenigstens folgende Modellelemente verfügbar: Elemente zum Erzeugen von Eingangsdaten, Elemente zum Erzeugen von Triggerinformationen (z. B. Triggerdaten) und Funktionselemente (Berechnungselemente) zum Erzeugen von Ausgangsdaten basierend auf vorgegebenen Eingangsdaten und Triggerinformationen.

Auch kann die Modellierungs/Simulations-Software z. B. Elemente zum Visualisieren von Eingangsdaten und/oder Zwischenergebnissen und/oder Ausgangsdaten bereitstellen.

Im Falle einer modifizierten Funktionalität eines Motorsteuergeräts können die zum Erzeugen von Triggerinformationen vorgesehenen Elemente z. B. als "zeitsynchrone" Triggerelemente oder als "segmentsynchrone" Triggerelemente vorgesehen sein. Eine zeitsynchrone Triggerung (Auslösung einer Berechnung oder eines Datentransfers) bedeutet hierbei in an sich bekannter Weise die Zugrundelegung einer "Zeitbasis", wie sie z. B. bei einem periodischen Aufruf einer bestimmten Berechnungsfunktion (z. B. 10ms-Raster) benötigt wird. Demgegenüber bezeichnet eine segmentsynchrone Triggerung in an sich bekannter Weise eine zeitliche Koordination bezüglich einer so genannten "Winkelbasis", also z. B. die Auslösung von Berechnungsfunktionen oder Datentransfervorgängen (z. B. Einlesen von Sensordaten oder Ausgeben von Aktorsteuerdaten) bei bestimmten Kurbelwinkelstellungen bzw. nach Vorliegen einer gewissen Kurbelwinkeldifferenz. Auch können z. B. "ereignisgesteuerte" Triggerelemente vorgesehen sein, bei denen sich die Triggerung auf irgendein bestimmtes Ereignis (z. B. "Zündung ein" etc.) bezieht. Neben ereignissynchronen Triggerungen können z. B. auch Triggerungen in einem bestimmten zeitlichen Abstand von bestimmten Ereignissen vorgesehen sein. Beispielsweise kann die Auslösung einer Steuerfunktion (z. B. Zündung) in einem bestimmten zeitlichen Abstand von einem anderen Ereignis (z. B. Kraftstoffeinspritzung) benötigt werden.

In einer besonders bevorzugten Ausführungsform erfolgt die Ergänzung in Schritt c) gemäß eines Algorithmus, mittels welchem Schnittstelleneinheiten unter Berücksichtigung von vorgegebenen Freischnitten der Steuergerät-Software erzeugt werden. Wenngleich eine solche Strukturierung zumindest ansatzweise bereits im Schritt b) durchgeführt werden kann, so ist die automatisierte Strukturierung im Schritt c) vor allem im Hinblick auf die Vermeidung bzw. Reduzierung von Fehlern vorteilhaft. Der verwendete Algorithmus kann insbesondere zur automatisierten Auflösung von Datenabhängigkeiten ausgebildet sein, die vor allem bei relativ komplexen Funktionalitätsmodellen vom Funktionsentwickler nicht ohne weiteres erkannt und fehlerfrei umstrukturiert werden können.

Komplexe Funktionalitätsmodelle bestehen in der Regel aus einer Vielzahl von funktionellen Einheiten, die an unterschiedliche Freischnitte der Steuergerät-Software anzubinden sind und zumeist auch von unterschiedlichen Funktionstriggern gestartet werden müssen. Darüber hinaus müssen diese funktionellen Einheiten oftmals Daten zu unterschiedlichen Zeiten aus dem Steuergerät einlesen bzw. in das Steuergerät schreiben. Die von einer Modellierungs/Simulations-Software zwar bereitstellbaren Elemente zum Erzeugen von Triggerdaten müssen deshalb in geeigneter Weise an die übrigen Elemente des Funktionalitätsmodells angepasst bzw. angebunden werden. Bei komplexen Funktionalitätsmodellen stellt dies grundsätzlich einen bemerkenswerten Aufwand dar, da mehrere Schnittstelleneinheiten definiert bzw. aufgebaut werden müssen und darüber hinaus neben dieser bloßen Ergänzung der übrigen Softwareelemente auch unterschiedliche Triggerungen der einzelnen Modellteile und vorhandenen Datenabhängigkeiten berücksichtigt werden müssen. Mit der Erfindung kann vorteilhaft ein automatisierter "Interfaceaufbau" für funktionelles Rapid Prototyping erfolgen, wodurch der bislang erforderliche Zeitaufwand zum manuellen Einbauen bzw. Anpassen solcher Schnittstelleneinheiten rund um das Funktionalitätsmodell entfällt. Dieser Aufbau der Schnittstelle zwischen dem Funktionalitätsmodell und der regulären Steuergerät-Software muss vom Funktionsentwickler nicht mehr zeitaufwendig manuell geleistet werden. Unberücksichtigte oder falsch aufgelöste Datenabhängigkeiten, die bislang erst nach und nach oder überhaupt nicht aufgefallen sind, können mit der Erfindung vermieden werden. Dies vermeidet zuverlässig aufwendige Korrekturen in späteren Phasen des Funktionsentwicklungsprozesses.

In einer bevorzugten Ausführungsform erfolgt die Ergänzung in Schritt c) gemäß eines Algorithmus, mittels welchem Schnittstelleneinheiten unter Berücksichtigung von vorgegebenen Freischnitten der Steuergerät-Software erzeugt werden. Damit kann eine automatisierte und somit hinsichtlich etwaiger Fehler optimierte Anbindung des Funktionalitätsmodells über die Schnittstelleneinheiten an die reguläre Steuergerät-Software realisiert werden.

Um einen späteren Modellrückbau nach einer erfolgten Modifizierung einer Funktionalität zu vereinfachen, kann im Schritt c) eine Speicherung von Informationen im ergänzten Funktionalitätsmodell bzw. in der daraus sodann erzeugten Software (für die Prototyping-Einheit) vorgesehen sein, welche einen solchen Modellrückbau ermöglichen.

Gängige Steuergeräte der hier interessierenden Art verfügen oftmals über eine Reihe von Standard-Kommunikationsschnittstellen, über welche mit Sensoren oder Aktoren der betreffenden technischen Einrichtung kommuniziert werden kann. Oftmals sind auch Standard-Kommunikationsschnittstellen zur Kommunikation mit weiteren Steuergeräten vorhanden. Derartige Kommunikationsschnittstellen können auch im Rahmen der Erfindung vorteilhaft genutzt werden, indem ein Anschluss eines externen Zusatzgeräts über eine Standard-Kommunikationsschnittstelle des Steuergeräts erfolgt. Alternativ oder zusätzlich können auch dedizierte Schnittstellen am Steuergerät vorgesehen werden, um eine solche externe Prototyping-Einheit anzuschließen.

Die Erfindung wird nachfolgend anhand eines Ausführungsbeispiels mit Bezug auf die beigefügten Zeichnungen weiter beschrieben. Es stellen jeweils schematisch dar:
- Fig. 1: die Anbindung eines externen Zusatzgeräts (Rapid Prototyping Unit) an ein Motorsteuergerät zum Test eines Steuergerätbetriebs mit einer modifizierten Steuergerät-Funktionalität,
- Fig. 2: die Modellierung und Simulation der modifizierten Funktionalität, und
- Fig. 3: das Funktionsmodell von Fig. 2 nach wenigstens teilweise automatisierter Analyse und automatisiertem Aufbau von Software-Schnittstellen, welche die Nutzung der modifizierten Funktionalität nach der in Fig. 1 dargestellten Anbindung ermöglichen.

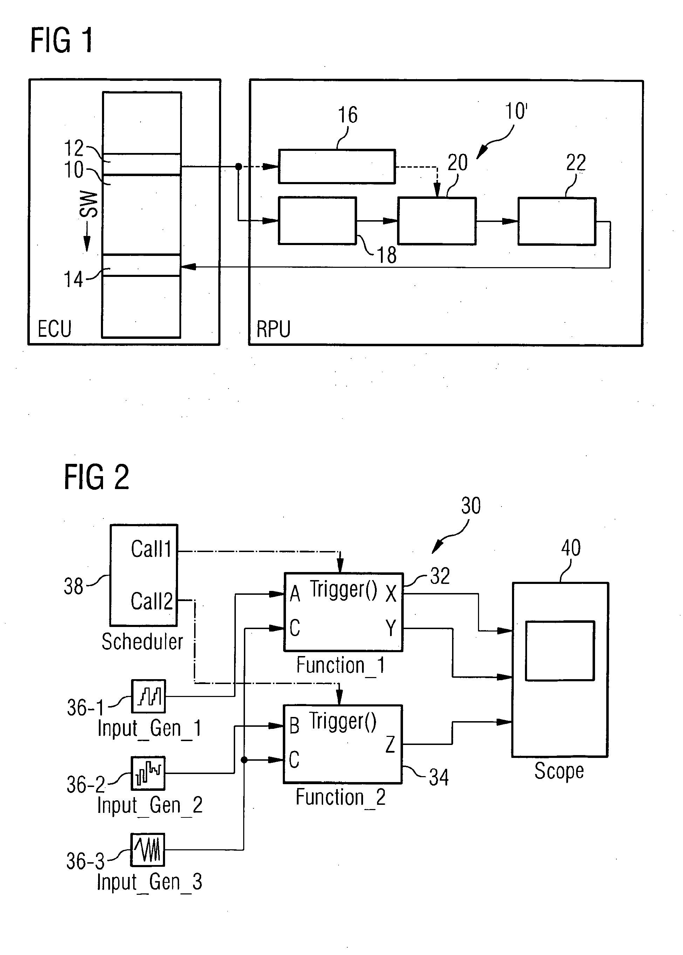

Fig. 1 veranschaulicht ein mikroprozessorgesteuertes Steuergerät ECU, in welchem eine Vielzahl von Funktionalitäten für die Steuerung einer Brennkraftmaschine durch eine im Steuergerät ablaufende Steuergerät-Software SW implementiert sind.

Die Steuergerät-Software SW enthält einen Softwareabschnitt 10 sowie Freischnitte 12 und 14, die in nachfolgend beschriebener Weise einen funktionellen Bypass für die reguläre Funktionalität 10 ermöglichen.

Der Freischnitt 12 stellt eine Aussprungstelle in der Software SW dar, an welcher die reguläre Funktionalität verlassen und eine neu entwickelte Funktionalität 10' angetriggert werden kann. Die modifizierte Funktionalität 10' ist durch Zusatzgerät-Software in einem ebenfalls mikroprozessorgesteuerten Zusatzgerät ("Rapid Prototyping Unit") RPU implementiert. Abweichend vom dargestellten Ausführungsbeispiel könnte eine solche "Rapid Prototyping Unit" wenigstens teilweise auch durch das Steuergerät ECU selbst implementiert sein, d. h. unter Nutzung von Hardware- und/oder Softwareressourcen des Steuergeräts ECU. Das Steuergerät kann hierfür eigens für die "Rapid Prototyping"-Funktion vorgesehene Ressourcen enthalten.

Die modifizierte Funktionalität 10' ist in Fig. 1 als Blockdiagramm dargestellt und umfasst einen Triggerblock 16 zur Triggerung einer Funktionsberechnung, einen Leseblock 18 zum Lesen von Eingangsdaten, einen Datenverarbeitungsblock bzw. Funktionsblock 20 zur Berechnung von Ausgangsdaten basierend auf den Eingangsdaten, und einen Schreibblock 22 zum Zurückschreiben von Ausgangsdaten zum Steuergerät ECU.

An dem Freischnitt 12 werden die für den Funktionsblock 20 benötigten Eingangsdaten sowie Triggerinformationen für den Triggerblock 16 an das Zusatzgerät RPU übergeben. Das Ergebnis der Berechnung wird in Form der Ausgangsdaten über den Freischnitt 14 an die Steuergerät-Software SW zurückgegeben.

Mit der in Fig. 1 dargestellten Anordnung kann der Steuergerätbetrieb unter Berücksichtigung einer versuchsweise modifizierten Funktionalität in komfortabler Weise einem Praxistest unterzogen werden.

Die Erzeugung der hierfür notwendigen Zusatzgerät-Software, welche die modifizierte Funktionalität 10' bereitstellt, war bislang mit einem erheblichen Aufwand an Zeit und somit Kosten verbunden. Durch die nachfolgend beschriebene Art und Weise der Erzeugung dieser Software wird dieser Aufwand jedoch beträchtlich verringert.

Fig. 2 veranschaulicht eine isolierte Modellierung und Simulation der modifizierten Funktionalität 10' auf einem Rechnersystem, bei dem es sich im dargestellten Beispiel um einen herkömmlichen PC handelt, auf welchem eine hierfür vorgesehene Modellierungs/Simulations-Software abläuft. Diese Modellierungs/Simulations-Software erlaubt es einem Benutzer, ein Funktionalitätsmodell 30 mit Datenein- und ausgängen und Triggereingängen modulartig als Verknüpfung vorgegebener Modellelemente zu erstellen und zu simulieren.

Das Modell 30 kann z. B. wie dargestellt ein "graphisches Modell" sein (z. B. so genanntes "Simulink"-Modell oder dergleichen). Abweichend vom dargestellten Ausführungsbeispiel kann an dieser Stelle jedoch auch ein "nicht-grafisches Modell", also z. B. Software-Code (z. B. C-Code) vorgesehen sein.

Das Modell 30 besteht im dargestellten Beispiel aus einem ersten Funktionselement 32 und einem zweiten Funktionselement 34, welche in der durch Pfeile symbolisierten Weise basierend auf Eingangsdaten A, B und C Ausgangsdaten X, Y und Z erzeugen.

Zum Zwecke der Simulation der durch das Modell 30 geschaffenen Funktionalität sind die Berechnungselemente 32, 34 eingangsseitig mit Datenerzeugungselementen 36-1, 36-2 und 36-3 zum Erzeugen der Eingangsdaten A, B, C sowie einem Triggerelement (so genannter "Scheduler") 38 zum Erzeugen von Triggerdaten zum Auslösen der Funktionsberechnungen verbunden. Ausgangsseitig sind die Berechnungselemente 32, 34 mit einem Datenvisualisierungselement 40 verbunden, welches es dem Funktionsentwickler ermöglicht, die berechneten Ausgangswerte X, Y und Z zu betrachten und zu analysieren.

In dieser Phase des Verfahrens kann der Funktionsentwickler das Modell 30 oder Teile davon insbesondere hinsichtlich notwendiger Aufrufraster bzw. Funktionstrigger, Datenein- und ausgängen sowie Datenabhängigkeiten zwischen den Modellteilen analysieren. Diese Analyse erfolgt wenigstens teilweise automatisiert, im dargestellten Ausführungsbeispiel z. B. durch eine auf dem Rechnersystem laufende Software, welche das vom Funktionsentwickler entworfene Funktionalitätsmodell gemäß eines vorgegebenen Algorithmus untersucht. Aus dieser Analyse ergibt sich dann schließlich, wie viele Funktionstrigger benötigt werden und welche Abhängigkeiten untereinander bestehen.

Optional können auch noch zusätzliche im Modell vorhandene Informationen ausgewertet werden, beispielsweise Charakteristika von Funktionstriggern (zeitsynchron, segmentssynchron, etc.). Zusätzlich kann auch die Simulationsumgebung des Modells analysiert werden, um beispielsweise weitere Informationen über Randbedingungen hinsichtlich notweniger Aufrufreihenfolgen zu erhalten.

Darüber hinaus kann als Ergänzung eine Analyse der Steuergeräte-Software SW hinsichtlich verfügbarer Freischnitte durchgeführt werden. Eine zusätzliche Erweiterung könnte eine Analyse sein, welche Daten in den von den Freischnitten betroffenen Teilen der Steuergeräte-Software von dieser berechnet werden. Mit dieser Information kann dann zusammen mit den Datenschnittstelleninformationen aus dem Funktionalitätsmodell analysiert werden, welche Freischnitte für welche Funktionstrigger oder Datenübertragungen zwischen Steuergerät und Zusatzgerät gut geeignet sind.

Der Funktionsentwickler hat nun durch Simulation sein Funktionalitätsmodell ausreichend getestet und optimiert. Es resultiert ein vom Funktionsentwickler optimiertes Funktionsmodell 30. Dieses Funktionsmodell wurde zumindest teilweise automatisiert analysiert, um Informationen zu erhalten, die für den nachfolgend beschriebenen Schritt (Schnittstelleneinbau) genutzt werden.

Als nächsten Entwicklungsschritt soll das Funktionalitätsmodell jetzt mittels Rapid Prototyping an das Steuergerät eines Kraftfahrzeugs angekoppelt bzw. angebunden werden. Dazu müssen die entsprechenden Schnittstelleneinheiten der benutzten Rapid-Prototyping-Toolkette eingebaut und somit die bestehende Simulationsumgebung des Funktionalitätsmodells ersetzt werden.

Basierend auf den Informationen, die aus der oben geschilderten Analyse erhalten worden sind, werden in automatisierter Weise (programmgesteuert) alle für die Anbindung des Funktionalitätsmodell 30 an das Steuergerät ECU notwendigen Software-Schnittstelleneinheiten in das Modell eingebaut und an die entsprechenden funktionellen Einheiten des Modells (hier: Funktionselemente 32 und 34) angeschlossen. Dieser "automatisierte Einbau der Interface-Einheiten" geschieht vorteilhaft nach einer durch einen Algorithmus festgelegten Systematik, bei welcher die Funktionseinheiten zum Dateneinlesen, Datenauslesen und Triggern strukturiert zusammengefasst werden. Bevorzugt werden diese Schnittstelleneinheiten fertig konfiguriert auf Basis von Informationen betreffend die Steuergerät-Software.

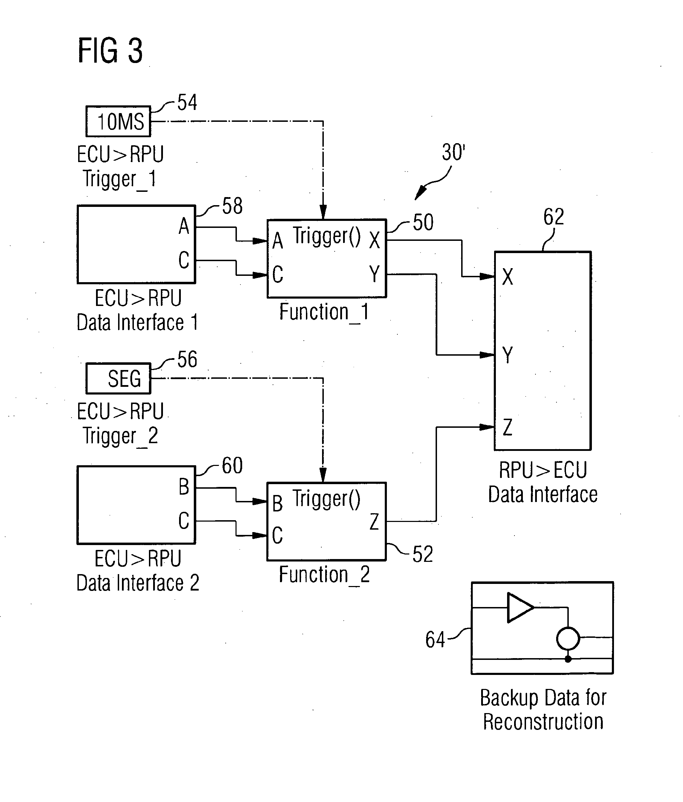

Fig. 3 veranschaulicht das Ergebnis dieses automatischen Einbaus von Schnittstelleneinheiten in das Funktionalitätsmodell 30. Dieses Ergebnis ist ein mit Schnittstelleneinheiten 54, 56, 58, 60, 62 ergänztes Funktionalitätsmodell 30', welches am Ende noch in eine Prototyping-Software gewandelt wird, die auf der Prototyping-Einheit (hier: Zusatzgerät RPU) lauffähig ist.

Durch die Analyse der Datenschnittstellen, der Funktionsmodellteile und des "Schedulers" im Modell 30 (Fig. 2) konnte erkannt werden, dass für das ergänzte Modell 30' (Fig. 3) zwei unabhängige Funktionstrigger benötigt werden, nämlich ein Aufrufraster mit einem 10 ms-Zyklus und ein segmentsynchrones Aufrufraster. Zudem wurde in diesem Beispiel erkannt, dass das Datum C von beiden Funktionselementen des Modells benötigt wird und daher aus Gründen der Datenaktualität für beide Berechnungen der Funktionselemente neu eingelesen werden sollten.

Das automatisiert ergänzte Modell 30' (bzw. die sodann daraus erzeugte Prototyping-Software) ist wieder schematisch in Funktionsblöcken dargestellt und umfasst Funktionsblöcke 50 und 52 zum Berechnen der Ausgangsdaten X, Y und Z auf Basis der Eingangsdaten A, B und C, die Triggerblöcke 54 und 56 zum Anstoßen der von den Funktionsblöcken 50, 52 durchzuführenden Berechnungen über die in der Steuergerät-Software SW eingebauten Freischnitte, die Dateneinleseblöcke 58 und 60 zum Einlesen der Daten A, C bzw. B, C, und den Datenrückschreibblock 62 zum Zurückschreiben der Ergebnisse X, Y, Z der Funktionalität in das Steuergerät ECU.

Im dargestellten Beispiel sind die Blöcke 50, 52 vorteilhaft vollkommen identisch zu den Blöcken 32, 34 von Fig. 2. Dies ist jedoch keineswegs zwingend.

Im dargestellten Beispiel werden in der automatisiert erzeugten Zusatzgerät-Software zusätzlich auch die für einen Modellrückbau notwendigen Informationen gespeichert, was in Fig. 3 durch einen Informationsblock 64 symbolisiert ist. Dies ist insbesondere dann vorteilhaft, wenn das Funktionsmodell bereits in ein in sich geschlossenes Modell integriert war und damit bereits simulationsfähig war. Diese Simulationsfähigkeit wird bevorzugt hergestellt, um die Funktionsweise des Modells bereits vor der Anwendung der Rapid Prototyping-Methode zu untersuchen. Im Informationsblock 64 sind die für eine Wiederherstellung notwendigen Daten gespeichert, so dass auch ein automatisierter Rückbau des Modells auf die vorherige Simulationsumgebung möglich ist.

## Patentansprüche

1. Verfahren zur Modifizierung wenigstens einer Funktionalität (10) eines mikroprozessorgesteuerten Steuergeräts (ECU), insbesondere eines Motorsteuergeräts für die Brennkraftmaschine eines Kraftfahrzeugs, in welchem eine Vielzahl von Funktionalitäten für eine Steuerung einer technischen Einrichtung durch eine Steuergerät-Software (SW) implementiert sind, umfassend die Schritte:
a) isoliertes Modellieren und Simulieren einer modifizierten Funktionalität (10') der Steuergerät-Software (SW) auf einem Rechnersystem zur Festlegung eines Funktionalitätsmodells (30) mit Datenein- und/oder ausgängen und/oder Triggereingängen,
b) wenigstens teilweise automatisiertes Analysieren des in Schritt a) festgelegten Funktionalitätsmodells (30) hinsichtlich der Funktionstriggerung (38) und/oder der Dateneingabe (36-1, 36-2, 36-3) und/oder der Datenausgabe,
c) Ergänzen des Funktionalitätsmodells (30) mit Schnittstelleneinheiten (54, 56, 58, 60, 62) basierend auf dem Ergebnis der Analyse von Schritt b),
d) Umwandeln des in Schritt c) erhaltenen ergänzten Funktionalitätsmodells (30') auf dem Rechnersystem in eine Software für eine mikroprozessorgesteuerte Prototyping-Einheit (RPU), und Übertragen dieser Software auf die Prototyping-Einheit (RPU) zur Steuerung der technischen Einrichtung unter Berücksichtigung der in Schritt a) modellierten Funktionalität (30).

2. Verfahren nach Anspruch 1, wobei das in Schritt c) vorgesehene Ergänzen wenigstens teilweise automatisiert, insbesondere vollständig automatisiert erfolgt.

3. Verfahren nach Anspruch 1 oder 2, wobei die Steuergerät-Software (SW) für wenigstens eine darin enthaltene Funktionalität (10) Freischnitte (12, 14) umfasst und/oder solche Freischnitte (12, 14) bei dem in Schritt c) vorgesehenen Ergänzen des Funktionalitätsmodells (30) in der Steuergerät-Software (SW) implementiert werden.

4. Verfahren nach einem der vorangehenden Ansprüche, wobei das in Schritt a) verwendete Rechnersystem ein PC ist.

5. Verfahren nach einem der vorangehenden Ansprüche, wobei der Schritt a) mittels einer auf dem Rechnersystem laufenden Modellierungs/Simulations-Software durchgeführt wird, welche es einem Benutzer erlaubt, das Funktionalitätsmodell (30) modulartig als Verknüpfung vorgegebener Modellelemente zu erstellen und zu simulieren, wobei die Modellelemente umfassen: Elemente (36-1, 36-2, 36-3) zum Erzeugen von Eingangsdaten (A, B, c), Elemente (38) zum Erzeugen von Triggerinformationen und Funktionselemente (32, 34) zum Erzeugen von Ausgangsdaten (X, Y, Z) basierend auf vorgegebenen Eingangsdaten (A, B, C) und Triggerinformationen.

6. Verfahren nach einem der vorangehenden Ansprüche, wobei die Ergänzung in Schritt c) gemäß eines Algorithmus erfolgt, mittels welchem Funktionseinheiten (58, 60, 62, 54, 56) zum Dateneinlesen, Datenauslesen und Triggern strukturiert werden.

7. Verfahren nach einem der vorangehenden Ansprüche, wobei die Ergänzung in Schritt c) gemäß eines Algorithmus erfolgt, mittels welchem Schnittstelleneinheiten (58, 60, 62) unter Berücksichtigung von vorgegebenen Freischnitten (12, 14) der Steuergerät-Software (SW) erzeugt werden.

8. Verfahren nach einem der vorangehenden Ansprüche, wobei in Schritt c) eine Speicherung von Informationen (64) im ergänzten Funktionalitätsmodell (30') erfolgt, die einen Modellrückbau ermöglichen.

9. Verfahren nach einem der vorangehenden Ansprüche, wobei als Prototyping-Einheit (RPU) ein Zusatzgerät vorgesehen ist, welches über eine Standard-Kommunikationsschnittstelle an das Steuergerät (ECU) angeschlossen werden kann.

## Geänderte Patentansprüche

### Geänderte Patentansprüche gemäss Regel 137(2) EPÜ.

**1.** Verfahren zur Modifizierung wenigstens einer Funktionalität (10) eines mikroprozessorgesteuerten Steuergeräts (ECU), in welchem eine Vielzahl von Funktionalitäten für eine Steuerung einer technischen Einrichtung durch eine Steuergerät-Software (SW) implementiert sind, umfassend die Schritte:
a) isoliertes Modellieren und Simulieren einer modifizierten Funktionalität (10') der Steuergerät-Software (SW) auf einem Rechnersystem zur Festlegung eines Funktionalitätsmodells (30) umfassend Modellteile mit wenigstens einem Dateneingang und/oder wenigstens einem Datenausgang und/oder wenigstens einem Triggereingang,
b) wenigstens teilweise automatisiertes Analysieren des in Schritt a) festgelegten Funktionalitätsmodells (30) hinsichtlich der Funktionstriggerung (38) und/oder der Dateneingabe (36-1, 36-2, 36-3) und/oder der Datenausgabe und/oder der Datenabhängigkeiten zwischen den Modellteilen,
c) Ergänzen des Funktionalitätsmodells (30) mit Schnittstelleneinheiten (54, 56, 58, 60, 62) basierend auf Informationen, die als Ergebnis der Analyse von Schritt b) erhalten wurden,
d) Umwandeln des in Schritt c) erhaltenen ergänzten Funktionalitätsmodells (30') auf dem Rechnersystem in eine Software für eine mikroprozessorgesteuerte Prototyping-Einheit (RPU), und Übertragen dieser Software auf die Prototyping-Einheit (RPU) zur Steuerung der technischen Einrichtung unter Berücksichtigung der in Schritt a) modellierten Funktionalität (30).

**2.** Verfahren nach Anspruch 1, wobei das mikroprozessorgesteuerte Steuergerät (ECU) ein Motorsteuergerät für die Brennkraftmaschine eines Kraftfahrzeugs ist.

**3.** Verfahren nach Anspruch 1 oder 2, wobei das in Schritt c) vorgesehene Ergänzen wenigstens teilweise automatisiert erfolgt.

**4.** Verfahren nach Anspruch 3, wobei das in Schritt c) vorgesehene Ergänzen vollständig automatisiert erfolgt.

**5.** Verfahren nach einem der vorangehenden Ansprüche, wobei die Steuergerät-Software (SW) für wenigstens eine darin enthaltene Funktionalität (10) Freischnitte (12, 14) umfasst.

**6.** Verfahren nach einem der vorangehenden Ansprüche, wobei für wenigstens eine Funktionalität (10) Freischnitte (12, 14) bei dem in Schritt c) vorgesehenen Ergänzen des Funktionalitätsmodells (30) in der Steuergerät-Software (SW) implementiert werden.

**7.** Verfahren nach einem der vorangehenden Ansprüche, wobei das in Schritt a) verwendete Rechnersystem ein PC ist.

**8.** Verfahren nach einem der vorangehenden Ansprüche, wobei der Schritt a) mittels einer auf dem Rechnersystem laufenden Modellierungs/Simulations-Software durchgeführt wird, welche es einem Benutzer erlaubt, das Funktionalitätsmodell (30) modulartig als Verknüpfung vorgegebener Modellelemente zu erstellen und zu simulieren, wobei die Modellelemente umfassen: Elemente (36-1, 36-2, 36-3) zum Erzeugen von Eingangsdaten (A, B, c), Elemente (38) zum Erzeugen von Triggerinformationen und Funktionselemente (32, 34) zum Erzeugen von Ausgangsdaten (X, Y, Z) basierend auf vorgegebenen Eingangsdaten (A, B, C) und Triggerinformationen.

**9.** Verfahren nach einem der vorangehenden Ansprüche, wobei die Ergänzung in Schritt c) wenigstens teilweise automatisiert gemäß eines Algorithmus erfolgt, mittels welchem Funktionseinheiten (58, 60, 62, 54, 56) zum Dateneinlesen, Datenauslesen und Triggern strukturiert werden.

**10.** Verfahren nach einem der vorangehenden Ansprüche, wobei die Ergänzung in Schritt c) wenigstens teilweise automatisiert gemäß eines Algorithmus erfolgt, mittels welchem Schnittstelleneinheiten (58, 60, 62) unter Berücksichtigung von vorgegebenen Freischnitten (12, 14) der Steuergerät-Software (SW) erzeugt werden.

**11.** Verfahren nach einem der vorangehenden Ansprüche, wobei die Ergänzung in Schritt c) wenigstens teilweise automatisiert gemäß eines Algorithmus erfolgt, mittels welchem das Funktionalitätsmodell (30) ferner mit Informationen (64) ergänzt wird, die einen Modellrückbau ermöglichen.

**12.** Verfahren nach einem der vorangehenden Ansprüche, wobei als Prototyping-Einheit (RPU) ein Zusatzgerät vorgesehen ist, welches über eine Standard-Kommunikationsschnittstelle an das Steuergerät (ECU) angeschlossen werden kann.
